# EUROPÄISCHE PATENTANMELDUNG

(11) **EP 1 134 870 A2**
(43) Veröffentlichungstag der Anmeldung: **19.09.2001**
(21) Anmeldenummer: 01104205.8
(22) Anmeldetag: 22.02.2001
(51) Int. Cl.: H02J 7/00

(54) **Einrichtung und Verfahren zur Erkennung einer Fremdenergieversorgung insbesondere eines Kraftfahrzeuges**

(30) Priorität: 09.03.2000 DE 10011404
(71) Anmelder: DaimlerChrysler AG, 70567 Stuttgart (DE); ROBERT BOSCH GmbH, 70469 Stuttgart (DE)
(72) Erfinder: Mäckel, Rainer, 53639 Königswinter (DE); Kneifel, Marcus, 71701 Schwieberdingen (DE)

(57) **Zusammenfassung**

Die Einrichtung zur Erkennung eines Fremdstarts ist in ein Fahrzeug eingebaut, das ein elektrisches Bordnetz (14) aufweist, das über eine Fahrzeugbatterie (10) mit einer Bordnetzspannung von etwa 12,5 V gespeist wird. Ein Minuspol (11) der Batterie (10) ist mit einer Fahrzeugmasse (15) verbunden. Zwischen einem Pluspol (12) der Batterie (10) und dem Bordnetz (14) ist eine Überwachungseinheit (13) angeordnet. In der Überwachungseinheit (13) sind ein herkömmlicher Spannungssensor (20) zur Erfassung der Bordnetzspannung, ein ebenfalls herkömmlicher Stromsensor (21) zur Erfassung des aus der Batterie fließenden Stroms, sowie ein herkömmlicher Temperatursensor (22) zur Erfassung der Betriebstemperatur der Batterie (10) vorgesehen. Die Hauptmessgröße ist die Bordnetzspannung; der Batteriestrom und die Batterietemperatur stellen Hilfsmessgrößen beim Überwachungsalgorithmus dar. Weiterhin enthält die Überwachungseinheit (13) einen Mikrocontroller (23), der über einen CAN-Bus (25) eine Veränderung der Bordnetzbelastung erkennen kann. Wie durch die gestrichelte Linie (26) angedeutet, kann die Bordnetzbelastung auch unmittelbar über einen steuerbaren Schalter (24) erfasst werden.

## Beschreibung

Die Erfindung betrifft eine Einrichtung zur Erkennung einer Fremdenergieversorgung eines Fahrzeugs, insbesondere zur Erkennung eines Fremdstarts eines Kraftfahrzeugs, das ein elektrisches Bordnetz mit einer Batterie zur Bereitstellung einer Bordnetzspannung aufweist. Zudem betrifft die Erfindung ein Verfahren zum Betrieb einer solchen Einrichtung.

In Fahrzeugen werden zunehmend sicherheitsrelevante Funktionen ausschließlich elektrisch betrieben. Als Beispiel sei nur die jüngst entwickelte elektrische Bremse genannt. Um sicherzustellen, dass die Funktionsfähigkeit solcher Komponenten ständig gewährleistet ist, müssen diese ununterbrochen mit elektrischer Energie versorgt werden. Es ist bekannt, hierzu in einem Fahrzeug zwei Energiequellen, nämlich eine Batterie und einen Generator, vorzusehen.

Da die Lebensdauer einer konventionellen Blei-Säure-Batterie im Regelfall geringer ist als die Lebensdauer des Fahrzeugs, kommt es regelmäßig vor, dass nur noch eine der beiden genannten Energiequellen funktionstüchtig ist. In den meisten Fällen wird dabei der Generator langlebiger sein als die Batterie.

Ein Verfahren zur Überwachung des Funktionszustandes einer Batterie mittels deren Batteriespannung ist aus DE 19517709 bekannt. Abhängig vom Ergebnis der Überwachung bzw. den dabei ermittelten Daten wird dort insbesondere entschieden, ob eine an die Batterie angeschlossene Maschine für einen weiteren Arbeitsgang freigegeben wird oder nicht.

Kommt es nun bei einer leeren oder defekten Batterie auch zu einem Schaden oder zu einer Überlastung des Generators, so ist die Versorgung der Verbraucher nicht mehr sichergestellt und das Fahrzeug kann in einen sicherheitskritischen Zustand gelangen. Eine Überlastung des Generators kann dann auftreten, wenn mehr Verbraucher zugeschaltet sind als der Generator nominell versorgen kann. Aus diesem Grund sind Notmaßnahmen zu treffen, die auf der einen Seite den Fahrer warnen, auf der anderen Seite aber auch das Bordnetz möglichst lange in einem betriebssicheren Zustand zu halten. Letzteres kann dadurch erreicht werden, dass nur noch wenige wichtige Verbraucher ein- bzw. zugeschaltet bleiben.

Bei einer leeren oder defekten Batterie ist das Fahrzeug überdies nicht mehr startfähig, so dass die Startfähigkeit an sich als Kriterium für den Zustand der Energiequelle Batterie angesehen werden kann. Häufig wird in diesen Fällen jedoch mit einem zweiten Fahrzeug Starthilfe geleistet und eine intakte Batterie sozusagen simuliert. Dabei werden die vorerwähnten Sicherheitsmaßnahmen nicht durchgeführt und die Warnung bzw. die Stabilisierungsmaßnahmen greifen nicht. Aus diesem Grund muss eine Erkennung eines Fremdstarts erfolgen. Aus der DE 196 49 392 C2 ist dazu lediglich bekannt, ein Verbindungskabel zur Spannungserhaltung durch eine externe Stromquelle mit einer elektronischen Schaltung zu versehen, welche den korrekten Anschluß des Kabels prüft. Aus der DE 298 06 441 ist zur Anzeige der Aufschaltung einer zusätzlichen oder fremden Energiespeichereinheit auf das Fahrzeugbordnetz eine Warnlampe vorgesehen.

Der Erfindung liegt somit die Aufgabe zugrunde, eine Einrichtung sowie ein Verfahren der eingangs beschriebenen Art anzugeben, die eine möglichst sichere Erkennung einer Fremdenergieversorgung bzw. eines Fremdstarts erlauben. Die Einrichtung soll zugleich einfach und kostengünstig herstellbar und das Verfahren entsprechend einfach und kostengünstig implementierbar sein.

Die Aufgabe wird gelöst durch die Merkmale der unabhängigen Ansprüche. Weiterführende und vorteilhafte Ausgestaltungen sind den Unteransprüchen und der Beschreibung zu entnehmen.

Die Besonderheit der Erfindung liegt darin, eine insbesondere zwischen der Batterie und dem Bordnetz angeordnete Überwachungseinheit vorzusehen, die einen Sensor zur Erfassung bzw. Überwachung der Bordnetzspannung aufweist oder mit einem solchen Sensor zusammenarbeitet. Es liegt dabei die Überlegung zugrunde, dass bei einer elektrischen Kontaktierung einer Fremdbatterie mit einer Fahrzeugbatterie eine Änderung der Bordnetzspannung bzw. der Batterieparameter auftritt. Diese Änderung wird erfindungsgemäß erfasst und in Abhängigkeit von verschiedenen Parametern im Hinblick auf einen Fremdstart ausgewertet. Im Unterschied zum o.g. Stand der Technik wird nicht die Batteriespannung, sondern insbesondere die Bordnetzspannung als Ausgangsgröße für der Bewertung herangezogen.

Zusätzlich kann vorgesehen sein, dass die Überwachungseinheit einen Sensor zur Erfassung des aus der Batterie herausfließenden und/oder des in das Bordnetz hineinfließenden elektrischen Stroms aufweist oder mit einem solchen Sensor zusammenarbeitet. Zusammen mit der erfassten Bordnetzspannung lassen sich hiermit auch Änderungen der Belastung des Bordnetzes, d.h. der Bordnetzlast, feststellen und bei der Auswertung vorteilhaft berücksichtigen.

Es kann auch vorgesehen sein, dass die Überwachungseinheit einen Sensor zur Erfassung der Betriebstemperatur der Batterie aufweist oder mit einem solchen Sensor zusammenarbeitet. Eine Verbindung zweier Batterien erfolgt grundsätzlich im elektrischen Sinne einer Parallelschaltung, wodurch der Gesamtinnenwiderstand der Batterien herabgesetzt wird. Der Innenwiderstand kann dabei über eine Strom- und Spannungsmessung mit Hilfe der genannten Sensoren erfolgen. Als Folge des verringerten Innenwiderstandes erhöht sich auch der durch die Batterie hindurchfließende Strom, womit auch eine messbare Erhöhung der Batterietemperatur einhergeht.

Eine Automatisierung der genannten Auswertung kann dadurch erreicht werden, dass die Überwachungseinheit eine Rechnereinheit, insbesondere einen Mikrocontroller, zur Ermittlung von Änderungen der elektrischen Bordnetzgrößen aufweist.

Eine Änderung der Bordnetzlast kann vorteilhaft durch einen mit dem Mikrocontroller zusammenarbeitenden, steuerbaren Schalter, oder alternativ mittels über einen CAN-Bus des Fahrzeugs bereitgestellte und an den Mikrocontroller übermittelte Fahrzeugdaten festgestellt werden.

Eine weitere Ausführungsform sieht ein Zeitglied zur Erfassung einer Zeitdauer, insbesondere einer Mindestdauer, eines gegebenenfalls vorliegenden Spannungsverlustes der Bordnetzspannung vor. Zusammen mit der Feststellung, dass die Überwachungseinheit nach einem 'Power-On-Reset' neu gestartet bzw. hochgefahren wird, ermöglicht das Zeitglied die Erfassung eines totalen Spannungsverlustes der Batterie, zur Unterscheidung von nur kurzzeitigen Spannungseinbrüchen.

Ferner kann vorgesehen sein, dass die Überwachungseinheit nach einer vorgebbaren Zeitspanne in einen 'Sleep'-Modus übergeht, wodurch insbesondere Energie für die Versorgung der Einheit eingespart werden kann. Dabei können Mittel zur Speicherung eines Wertes der Bordnetzspannung, insbesondere ein Festwertspeicher, sowie Mittel zum Vergleich des gespeicherten Wertes mit einer etwa sensierten aktuellen Bordnetzspannung vorgesehen sein. Ist die Bordnetzspannung in einem stabilen Zustand, so können nach einem 'Wecken' der Überwachungseinheit grundsätzlich nur geringfügige Änderungen der Spannung, verglichen mit dem gespeicherten Wert, auftreten.

Das ebenfalls erfindungsgemäß vorgeschlagene Verfahren zum Betrieb einer vorgenannten Einrichtung bei einem einen Motor aufweisenden Kraftfahrzeug, wobei mittels des Motors ein elektrischer Spannungsgenerator betrieben wird, weist insbesondere die folgenden Schritte auf:
a) Überwachen wenigstens einer der elektrischen Bordnetzgrößen und/oder des Zustandes der Überwachungseinheit während einer Anlaufphase der Überwachungseinheit;
b) Überwachen wenigstens einer der elektrischen Bordnetzgrößen vor Durchführen eines Motorstarts;
c) Überwachen wenigstens einer der Batteriezustandsgrößen während einer Motorstartphase.

Bei dem Verfahren kann nun ein zusätzlicher Schritt d) vorgesehen sein, in dem wenigstens eine der Batteriezustandsgrößen nach bereits gelungenem Motorstart bis hin zu einem Fahrtbeginn des Fahrzeugs überwacht wird, um festzustellen, ob ein Abklemmen eines Fremdstartkabels erkannt wird. Erfahrungsgemäß werden nämlich nach einem mittels elektrischer Starthilfekabel erfolgtem Fremdstart abschließend die Starthilfekabel wieder an den beiden Fahrzeugen abgeklemmt. Das Abklemmen erfolgt dabei jedenfalls erst nach beim starthilfenehmenden Fahrzeug bereits erfolgtem Motorstart und impliziert messbare Änderungen von Batteriezustandsgößen wie z.B. die Batteriespannung. Nach gelungenem Motorstart wird der Generator des Starthilfe nehmenden Fahrzeugs einen Strom liefern, der zu einem großen Teil in die Batterie fließt. Weiterhin kann Strom in die Batterie des Starthilfe gebenden Fahrzeugs fließen. Wird nun in diesem Fall das Starthilfekabel abgeklemmt, so sinkt der Messstrom in die Batterie sprungartig. Dies kann als Abklemmen des Starthilfekabels und somit als Fremdstart erkannt werden. Diese Routine wird beim Losfahren des Fahrzeugs beendet. Durch diesen weiteren Überwachungsschritt lässt sich somit die Erkennungssicherheit eines Fremdstarts noch deutlich steigern.

Weiterhin kann als Plausibilisierung zusätzlich ein Schaltersignal des Kofferraumdeckels bzw. der Motorraumhaube ausgewertet werden, um festzustellen, ob dieser geöffnet wurde. Je nachdem, ob die Batterie im Motorraum oder im Kofferraum angeordnet ist, wird, im Falle eines Zugriffs auf die Batterie beispielsweise zum Anklemmen eines Starthilfekabels, einer dieser Sensoren eine 'geöffnete Haube' anzeigen. Eine geöffnete Haube (bzw. Deckel) stellt sozusagen eine notwendige, aber nicht hinreichende Bedingung für einen erfolgenden Fremdstart dar.

Der bzw. die Schritte a) werden dabei vorteilhaft nur einmal während des Hochfahrens bzw. des Starts der Überwachungseinheit durchlaufen, wohingegen die Schritte b) und c) in einer Schleife bis zum Erreichen eines definierten Endzustandes durchlaufen werden.

Die Überwachungseinheit kann aus verschiedenen Zuständen hochfahren. Normalerweise befindet sie sich entweder in einem Betriebsmodus oder dem bereits genannten 'Sleep'-Modus, d.h. die Einheit ist im Ruhezustand, reagiert jedoch auf Veränderungen des Fahrzeugzustandes oder auf interne Wecksignale. Bei Schritt a) kann daher erfindungsgemäß auch geprüft werden, ob die Überwachungseinheit aus einem 'Sleep'-Modus oder durch einen 'Power-On-Reset' aktiviert wird, wobei im Falle eines 'Power-On-Reset' weiter geprüft wird, ob eine vorgebbare Mindestdauer des Spannungsverlusts überschritten worden ist. Zudem kann vorgesehen sein, dass vor einem Eintreten der Überwachungseinheit in den 'Sleep'-Modus eine zuletzt gemessene Bordnetzspannung und/oder eine zyklisch mittels regelmäßigen Weckens aus dem 'Sleep'-Modus erfasste Bordnetzspannung abgespeichert wird (werden) und dass eine regelmäßig erfasste aktuelle Bordnetzspannung mit dem abgespeicherten Wert verglichen wird.

Im Falle, dass die Batterie geladen wird, ist der Ladevorgang ohne einen Motostart nach einer gewissen Zeit beendet. Danach sinkt die Bordnetzspannung wieder ab. Das Absinken der Spannung allein reicht aber nicht aus, um ein Abklemmen einer Fremdenergiequelle erkennen zu können. Erfindungsgemäß kann daher vorgesehen sein, dass zusätzlich die Bordnetzlast erfasst und entsprechend verglichen wird.

Bei einem Ausführungsbeispiel wird in Schritt b) geprüft, ob die Bordnetzspannung, bei nicht laufendem Motor, einen zwischen einer Batterienormspannung und einer Generatornormspannung liegenden ersten Schwellenwert überschreitet, und wenn dies der Fall ist, ob innerhalb eines vorgebbaren ersten Zeitfensters ein Motorstart durchgeführt wird. Bei einem Fremdstart wird üblicherweise zunächst eine Verbindung zwischen den zwei Fahrzeugbatterien hergestellt und danach der Motor des Starthilfe gebenden Fahrzeugs gestartet, wodurch dessen Generator eine Spannung von ca. 14 V bereitstellt. Dies wiederum führt im Starthilfe nehmenden Fahrzeug ebenfalls zu einer Anhebung der Bordnetzspannung auf etwa 14 V bzw. einen Spannungswert zwischen dem Batterienormwert von ca. 12,5 V und den vom Generator gelieferten 14 V. Überschreitet nun die Bordnetzspannung des Starthilfe nehmenden Fahrzeugs bei dort stehendem Motor den genannten ersten Schwellenwert, so muss zwangsläufig eine Fremdenergiequelle vorhanden sein.

Wird nun kein Motorstart durchgeführt, so wird lediglich die Batterie geladen. Wird der Ladevorgang dann abgebrochen, sinkt die Bordnetzspannung wieder ab. Erfindungsgemäß wird daher vorgeschlagen, dass im Falle, dass innerhalb des ersten Zeitfensters kein Motorstart erfolgt ist, weiter geprüft wird, ob die Bordnetzspannung wieder absinkt, ohne dass sich die Bordnetzlast ändert.

Liegt der Spannungspegel allerdings unterhalb des genannten ersten Schwellenwertes, wird erfindungsgemäß so verfahren, dass weiter geprüft wird, ob sich die Bordnetzspannung, bei nicht laufendem Motor, innerhalb eines wenige Sekunden, insbesondere etwa 5 - 10 Sekunden andauernden vorgebbaren zweiten Zeitfensters erhöht. Da ein Fahrzeug, welches fremdgestartet werden muss, eine leere Batterie hat, wird deren Ruhespannung relativ gering sein. Wird nun eine zweite Batterie mit dieser Batterie verbunden, so findet ein Spannungsausgleich statt, der die Spannung im fremdstartnehmenden Bordnetz kurzzeitig erhöht.

Zur Plausibilisierung der vorgenannten Spannungserhöhung kann erfindungsgemäß zusätzlich geprüft werden, ob die Bordnetzspannung auch einen zweiten Schwellenwert überschreitet. Hierdurch kann vorteilhaft verhindert werden, dass eine Erholung der Batteriespannung nach dem Abschalten eines Verbrauchers, z.B. eines Starters, als Anklemmen einer Fremdenergiequelle gewertet wird.

Gemäß einem weiteren Ausführungsbeispiel wird in Schritt b) ferner geprüft, ob die Bordnetzspannung, bei gleichbleibender Bordnetzlast und ohne dass der Generator Strom liefert, einen dritten Schwellenwert überschreitet. Ändert sich die Belastung des Bordnetzes nicht bzw. wird die Belastung nicht größer, so kann keine Spannung größer dem dritten Schwellenwert auftreten. Wird eine über diesem Schwellenwert liegende Spannung gemessen, ohne dass der Generator Strom liefert, so muss von einer Fremdenergieversorgung ausgegangen werden.

Bei einem weiteren Ausführungsbeispiel ist vorgesehen, dass in Schritt c) der elektrische Innenwiderstand der Batterie während eines gelungenen Motorstarts, insbesondere über eine Strom- und Spannungsmessung mit Hilfe der genannten Sensoren (ggf. als Funktion der Temperatur), erfasst und zwischengespeichert wird und nachfolgend geprüft wird, ob der aktuell gemessene Innenwiderstand unterhalb des gespeicherten Wertes liegt. Dabei kann zusätzlich geprüft werden, ob der aktuelle Wert deutlich geringer ist als bei einem zuletzt erfolgten Fehlstart oder ob der Wert geringer ist als ein vorgegebener Wert. Durch die Verbindung der beiden Batterien wird im elektrischen Sinne eine Parallelschaltung der beiden Spannungsquellen mit ihren jeweiligen Innenwiderständen erreicht. Hierdurch wird der Gesamtinnenwiderstand der beiden Batterien herabgesetzt. Wird nun bei einem erneuten Startversuch, nachdem eine Fremdenergiequelle angeklemmt wurde, ohne dass dies in Schritt b) erkannt wurde, ein deutlich geringerer Innenwiderstand der Batterie erkannt, wird erfindungsgemäß auf einen Fremdstart geschlossen. Zusätzlich kann die Betriebstemperatur der Batterie erfasst und geprüft werden, ob die Betriebstemperatur den erfassten Wert überschreitet.

Vorteilhaft können der erfasste Innenwiderstand und/oder die erfasste Betriebstemperatur der Batterie im Falle eines ersten Startversuchs abgespeichert werden und die Batterieparameter des jeweils zuletzt erfolgten Startversuchs als Referenz herangezogen werden.

Bei einem erfindungsgemäß ebenfalls vorgeschlagenen Verfahren zum Erkennen eines fremdverursachten Anschiebens, beispielsweise eines Anschleppens eines Kraftfahrzeugs, ist vorgesehen, dass eine Raddrehzahl und eine Motordrehzahl des Kraftfahrzeugs überwacht werden und im Falle des Erfassens eines Wertes > 0 der Raddrehzahl und gleichzeitig eines Wertes = 0 der Motordrehzahl von einem fremdverursachten Anschieben, insbesondere von einem Anschleppen des Kraftfahrzeugs, ausgegangen wird. Diese Erkennung kann dabei vorteilhaft als zusätzlicher Überwachungsschritt bei einem vorgenannten Verfahren eingesetzt werden.

Die Erfindung wird nachfolgend anhand von in Zeichnungen dargestellten Ausführungsbeispielen näher erläutert, wobei sich gleiche Referenzzeichen auf funktional gleiche oder ähnliche Merkmale beziehen. In Zusammenschau mit den Ansprüchen ergeben sich daraus weitere Eigenschaften, Merkmale und Vorteile der Erfindung.

Im Einzelnen zeigen
Fig. 1 eine erfindungsgemäße Erkennungseinrichtung in schematisierter Blockdarstellung;
Fig. 2 einen erfindungsgemäßen Basisalgorithmus zur Erkennung eines Fremdstarts;
Fig. 3 eine erste Detaillierungsstufe des in Fig. 2 gezeigten Basisalgorithmus;
Fig. 4 a - c drei Teilansichten einer zweiten Detaillierungsstufe des in Fig. 2 gezeigten Basisalgorithmus.

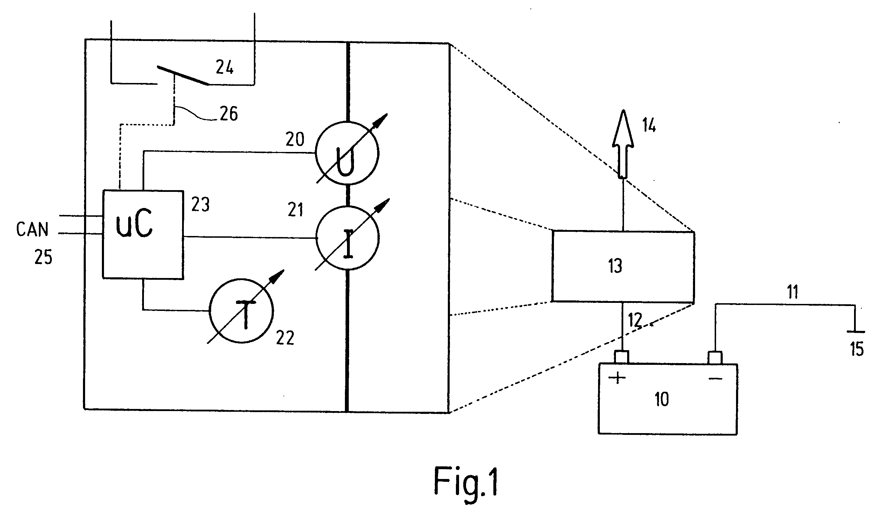

Fig. 1 zeigt eine in ein (hier nicht gezeigtes) Kraftfahrzeug eingebaute erfindungsgemäße Einrichtung zur Erkennung eines Fremdstarts. Das Fahrzeug weist ein elektrisches Bordnetz 14 auf, das über eine Fahrzeugbatterie 10 mit einer Bordnetzspannung von 12 V gespeist wird. Ein Minuspol 11 der Batterie 10 ist mit einer Fahrzeugmasse 15 verbunden. Zwischen einem Pluspol 12 der Batterie 10 und dem Bordnetz 14 ist eine erfindungsgemäße Überwachungseinheit 13 angeordnet.

In der Überwachungseinheit 13 sind Sensoren 20 - 22 vorgesehen, und zwar ein herkömmlicher Spannungssensor 20 zur Erfassung der Bordnetzspannung, ein ebenfalls herkömmlicher Stromsensor 21 zur Erfassung des aus der Batterie fließenden Stroms, sowie ein herkömmlicher Temperatursensor 22 zur Erfassung der Betriebstemperatur der Batterie 10. Die Hauptmessgröße ist allerdings die Bordnetzspannung; der Batteriestrom und die Batterietemperatur stellen Hilfsmessgrößen bei dem nachfolgend noch eingehend beschriebenen Überwachungsalgorithmus dar.

Weiterhin enthält die Überwachungseinheit 13 einen Mikrocontroller 23, der über einen CAN-Bus 25 eine Veränderung der Bordnetzbelastung erkennen kann. Wie durch die gestrichelte Linie 26 angedeutet, kann die Bordnetzbelastung auch unmittelbar über einen steuerbaren Schalter 24 erfasst werden.

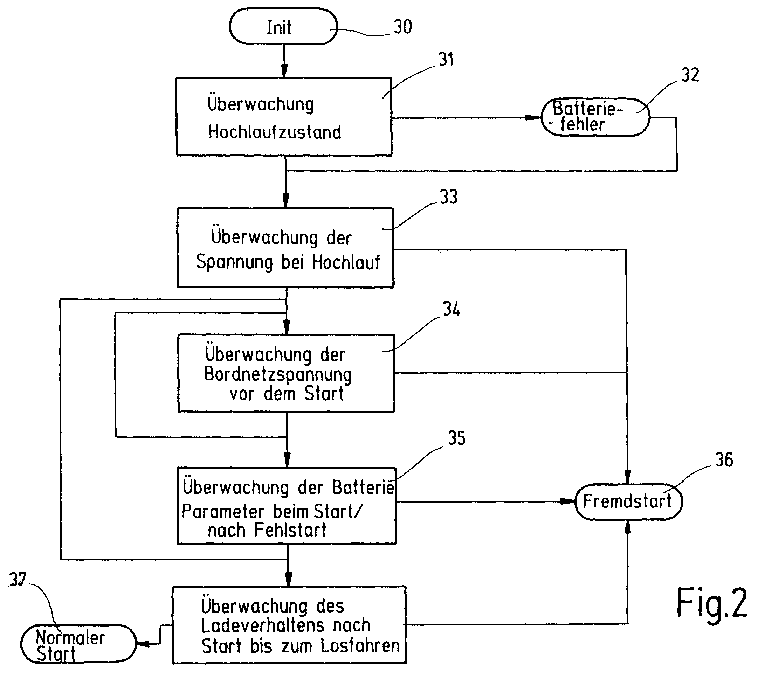

Fig. 2 zeigt einen erfindungsgemäßen Basisalgorithmus zur Erkennung eines Fremdstarts. Es ist zu ersehen, dass sich der Algorithmus in fünf Arbeitsphasen (I - V) unterteilt. Hierbei werden die Phasen I und II nur einmal beim Start eines den Algorithmus enthaltenden Programms durchlaufen; die Phasen III und IV werden dagegen solange durchlaufen, bis ein definierter Endzustand des Programmes (siehe nachfolgend) erreicht wird.

In der ersten, nach einer anfänglichen Initialisierung 30 des Programms folgenden Arbeitsphase (I) 31 wird während eines Anlauf- bzw. Hochlaufzustandes der Überwachungseinheit 13 festgestellt, ob die Überwachungseinheit 13 aus einem Betriebsmodus, einem 'Sleep'-Modus, oder aber nach einem 'Power-On-Reset' hochläuft. Läuft die Überwachungseinheit 13 aufgrund eines 'Power-On-Reset' hoch, so muss ein totaler Spannungsverlust des Bordnetzes vorgelegen haben. Die Überwachungseinheit übersendet daher oder veranlasst die Übermittlung eines 'Batteriefehler'-Signals 32 an die Fahrzeugelektrik, beispielsweise über den CAN-Bus 25.

Zur Plausibilisierung kann zusätzlich ein Zeitglied bzw. eine entsprechende Programmschleife vorgesehen sein, die überwacht, ob die Zeitdauer des Spannungsverlustet eine Mindestdauer überschritten hat. Ist dies der Fall, so kann von einer leeren oder in dem Zeitraum abgeklemmten Batterie ausgegangen werden.

In der zweiten Arbeitsphase (II) 33 wird die Bordnetzspannung, ebenfalls während des Hochfahrens der Überwachungseinheit, auf irgendwelche Spannungsänderungen hin überwacht. In der dritten Phase (III) 34 wird, bis hin zum Start des Motors, die Bordnetzspannung überwacht. Schließlich werden in der vierten Phase (IV) 35 einige Batterieparameter während eines Motorstarts oder nach ggf. erfolgtem Fehlstart überwacht. Als Ergebnis der zweiten, dritten und vierten Phase ergibt sich entweder, dass ein Fremdstart 36 (Starthilfe) des Motors vorgenommen wurde oder aber ein normaler Motorstart 37, unter ausschließlicher Verwendung der bordnetzeigenen Batterie, vorgelegen hat.

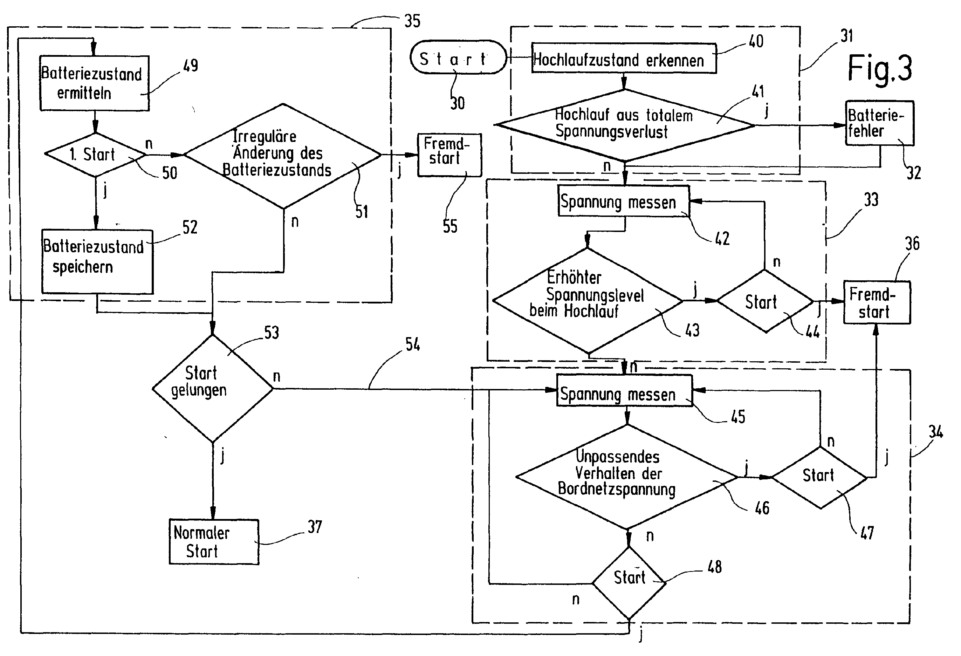

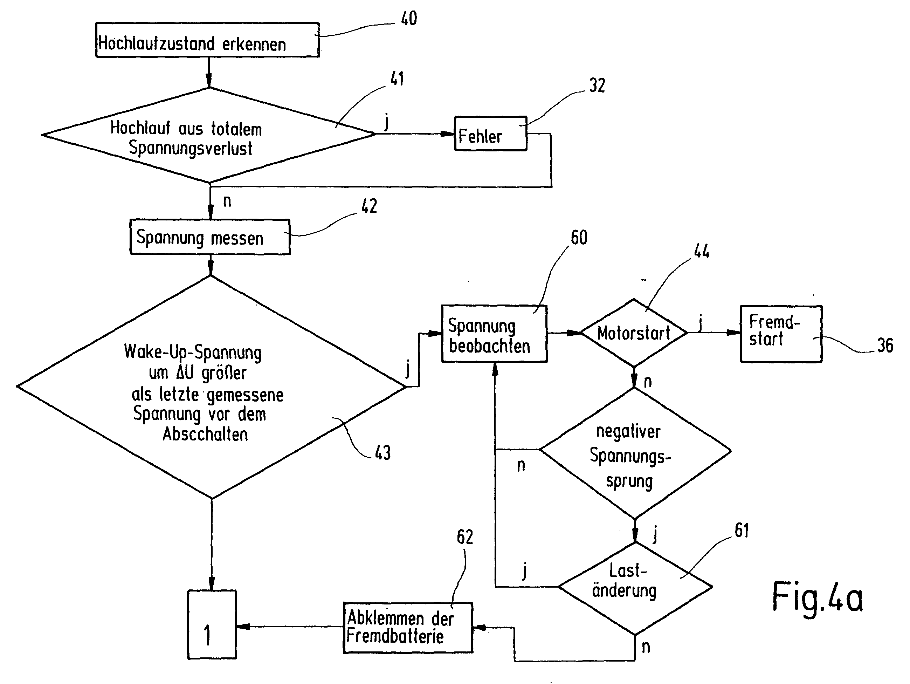

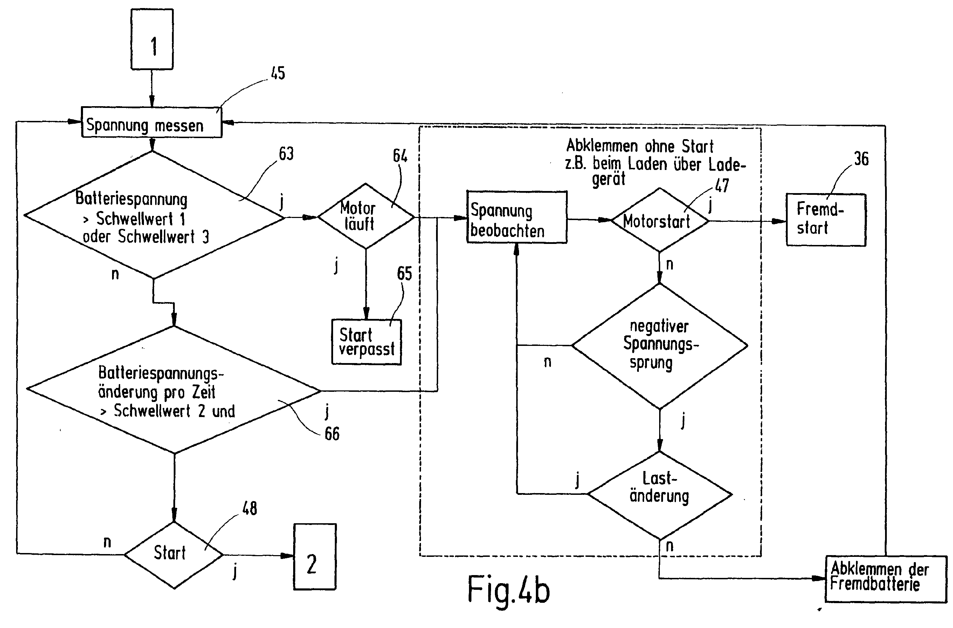

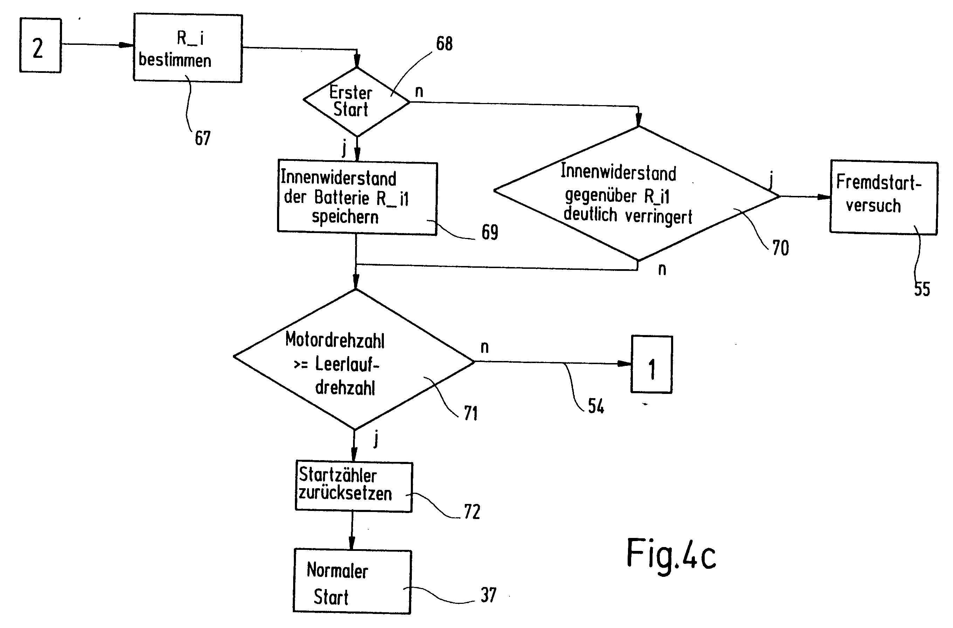

Eine erste Detaillierungsstufe des in Fig. 2 gezeigten Basisalgorithmus zeigt Fig. 3. Die in Fig. 2 beschriebenen fünf Phasen 31, 33 - 35 sind hier mittels gestrichelter Linien gegeneinander abgegrenzt. Zusätzlich zeigen die Fig. 4 a - c den Basisalgorithmus in drei Teilansichten einer weiteren Detaillierungsstufe. Diese Teilansichten lassen sich im übrigen über die in Quadraten eingezeichneten Zahlen "1" bis "3" zu einem einzigen Flussdiagramm zusammenfügen.

Zunächst wird, wie bereits anhand von Fig. 3 erläutert, festgestellt 40, ob ein Hochlaufzustand der Überwachungseinheit 13 vorliegt und dieser aus einem totalen Spannungsverlust heraus erfolgt ist 41. Wurde dies nicht erkannt, d.h. es liegt kein Batteriefehler 32 vor, wird - als Übergang in Phase II - die Bordnetzspannung während des Hochlaufs der Überwachungseinheit 13 gemessen 42.

Die Überwachungseinheit 13 speichert, bevor sie in den 'Sleep'-Modus geht, den jeweils zuletzt gemessenen Spannungswert ab. Zusätzlich kann, über ein regelmäßig erfolgendes Wecken der Überwachungseinhet 13, die Bordnetzspannung zyklisch gemessen werden und in einen Festwertspeicher abgelegt werden.

Im Falle, dass die Bordnetzspannung sich stabil verhalten hat, können nach dem Wecken nur geringere oder allenfalls gleiche Spannungswerte, verglichen mit dem gespeicherten Wert, auftreten. Ist aber die aktuell erfasste Bordnetzspannung um einen Betrag ΔU größer 43 als die im Festwertspeicher abgelegte letzte Messspannung, so muss diese Spannung durch eine externe Spannungsquelle erzeugt werden. Wird in diesem Fall auch noch der Fahrzeugmotor gestartet 44, so ist von einem Fremdstart 36 auszugehen. Wird jedoch kein Motorstart durchgeführt, so wird die Batterie von extern geladen.

Im Falle, dass die Batterie nur geladen wird, wird der Ladevorgang irgendwann ohne Start beendet. Danach sinkt die Spannung im Bordnetz wieder ab. Das Absinken der Spannung allein reicht (in diesem Fall) aber nicht aus, um ein Abklemmen 62 der Fremdenergiequelle eindeutig zu erkennen. Es wird daher ebenfalls geprüft 60, ob sich gleichzeitig die Belastung des Bordnetzes, sprich die Bordnetzlast, geändert 61 hat. Hierzu kann in der Überwachungseinheit 13 mittels des Stromsensors 21 auch der ins Bordnetz fließende Strom auf eine Änderung hin geprüft werden. Änderungen des Lastzustandes können auch über den CAN-Bus 25 der Überwachungseinheit 13 angezeigt werden, oder ein von dem Schalter 24 erzeugtes Schaltsignal wird als Erkennungssignal verwendet.

Die Arbeitsphasen III und IV werden nun, unter Bezugnahme auf die Figuren 4 und 5 a - c, eingehend beschrieben.

### Phase III: Überwachung der Bordnetzspannung vor einem Motorstart

Wird ein Fremdstart wie üblich durchgeführt, so wird zunächst eine Verbindung zwischen den beiden Fahrzeugbatterien hergestellt. Danach wird der Motor des Starthilfe gebenden Fahrzeugs gestartet, damit dessen Generator das Spannungsniveau auf etwa 14 V anheben kann.

Dies führt im Starthilfe nehmenden Fahrzeug ebenfalls zur Anhebung der Bordnetzspannung auf etwa 14 V. Daher wird in Phase III zunächst die Bordnetzspannung gemessen 45. Überschreitet 46 die Bordnetzspannung im Starthilfe nehmenden Fahrzeug nun einen ersten Schwellenwert 63 bei stehendem Motor 64, so muss zwangsläufig eine Fremdenergiequelle vorhanden sein. Wird bei angeklemmter Fremdenergiequelle dann ein Motorstart durchgeführt 47, erkennbar beispielsweise über ein entsporechendes Signal auf dem CAN-Bus, so wird dies als Fremdstart 36 gewertet. Wird kein Start durchgeführt, so wird angenommen, dass die Batterie lediglich fremdgeladen wird.

Im Falle, dass die Batterie geladen wird, wird dieser Vorgang irgendwann ohne Motorstart beendet. Dann sinkt die Bordnetzspannung wieder ab. Das Absinken der Spannung allein reicht aber nicht aus, ein Abklemmen der Fremdenergiequelle sicher erkennen zu können. Erfindungsgemäß wird daher auch betrachtet, ob die Belastung des Bordnetzes sich gleichzeitig geändert hat. Hierzu kann in der Überwachungseinheit 13 über den Stromsensor 21 der ins Bordnetz fließende Strom auf eine Änderung hin betrachtet werden und/oder über den CAN-Bus 25 Änderungen des Lastzustandes signalisiert werfden. Alternativ kann das Schalten des internen Schalters 24 als entsprechendes Signal verwertet werden.

Ändert sich die Belastung des Bordnetzes nicht bzw. wird die Belastung nicht größer, so kann keine Spannung größer als Uᵢₙᵢₜ (Schwellenwert 3) auftreten 63. Wird jedoch eine Spannung größer als Uᵢₙᵢₜ gemessen, ohne dass der Generator Strom liefert, so muss von einer Fremdenergieversorgung ausgegangen werden.

Hat bereits ein Fehlstart des Motors stattgefunden 65, so kann auch ein Vergleich der aktuellen Bordnetzspannung gegenüber einer Spannung U_{30 vor erstem Fehlstart} durchgeführt werden. Ist die Spannung vor einem der nächsten Starts größer als die Spannung U_{30 vor erstem Fehlstart}, so kann von einer Fremdversorgung ausgegangen werden, allerdings nur unter der Voraussetzung, dass die Belastung im Bordnetz sich ebenfalls nicht verringert hat. Die Veränderung der Belastung wird dabei wie oben ermittelt.

Liegt der Spannungspegel unterhalb des ersten Schwellenwertes, so wird eine weitere Überwachungsroutine aktiv. Da ein Fahrzeug, welches fremdgestartet werden muss, eine leere Batterie haben muss, wird deren Ruhespannung relativ gering sein. Wird nun eine zweite Batterie mit dieser Batterie verbunden, so findet ein elektrischer Ausgleichsvorgang, insbesondere ein Spannungsausgleich, zwischen diesen beiden Batterien statt. Hierdurch wird die die Spannung im fremdstartnehmenden Bordnetz erhöht. Der Spannungsausgleich folgt dabei regelmäßig einem expontentiellen Zeitverhalten und daher spielt sich diese Spannungserhöhung meist in einem sehr kurzen Zeitraum von nur wenigen Sekunden ab. Wird nun eine plötzliche Erhöhung der Bordnetzspannung innerhalb eines vorgegebenen Zeitfensters erkannt 66, während der Motor nicht läuft, so muss davon ausgegangen werden, dass eine Fremdenergiequelle angeschlossen wurde. Zur Plausibilisierung dieser Spannungserhöhung wird erfindungsgemäß noch geprüft, ob das Spannungsniveau auch einen zweiten Schwellenwert überschreitet. Hierdurch kann verhindert werden, dass eine Erholung der Batteriespannung nach dem Abschalten eines Verbrauchers, z.B. eines Starters, fälschlich als Anklemmen einer Fremdenergiequelle gewertet wird.

Alle genannten Bedingungen werden solange geprüft, bis ein Motorstart erkannt wird 48.

### Phase IV: Überwachung der Batterieparameter während eines Motorstarts

Während eines Motorstarts 50 wird der Innenwiderstand der Batterie über eine Strom- und Spannungsmessung mit Hilfe der Sensoren 20 und 21 ermittelt 49, 67. Zusätzlich kann mittels des Temperatursensors 22 die Batterietemperatur gemessen werden. Handelt es sich um einen ersten Startversuch 68, so werden diese Parameter abgespeichert 52, 69.

Die Verbindung der beiden Batterien entspricht im Ersatzschaltbild einer Parallelschaltung der beiden Quellen zusammen mit ihren jeweiligen Innenwiderständen. Daher wird der Gesamtinnenwiderstand der Batterieanordnung herabgesetzt. Wird nun bei einem erneuten Startversuch 50, nachdem eine Fremdenergiequelle angeklemmt wurde und ohne dass dies in Phase III erkannt wurde, ein deutlich geringerer Innenwiderstand der Batterie erkannt 51, 70, so wird auf einen Fremdstart 55 geschlossen. Alternativ dazu können auch die Batterieparameter des letzten Startversuchs als Referenz herangezogen werden.

Erfolgt nun ein Fehlstart des Motors, so wird wieder in Phase III zurückgesprungen 54. Wird der Start erfolgreich durchgeführt 71, ohne dass ein Fehler erkannt wurde, wird der Algorithmus bzw. das Programm beendet 37 sowie ein Startzähler zurückgesetzt 72. Im übrigen wird im Falle eines Fehlstarts vor dem ersten nachfolgenden Start die Bordnetzspannung U_{30 vor} _{erstem Fehlstart} gespeichert.

Die durch den vorgeschlagenen Algorithmus jeweils erkannten Betriebszustände können beispielsweise über den CAN-Bus den jeweiligen sicherheitsrelevanten Verbrauchern im Fahrzeug mitgeteilt werden.

Zusätzlich kann zum Zwecke der Plausibilisierung vorgesehen sein, dass ein Schaltersignal des Kofferraumdeckels bzw. der Motorraumhaube ausgewertet wird, je nachdem, ob die Batterie im Motorraum oder im Kofferraum angeordnet ist. Denn ein Zugriff auf die Batterie, beispielsweise zum Anklemmen eines Starthilfekabels, setzt notwendig voraus, dass der Deckel bzw. die Haube vorher geöffnet wurde.

Neben der beschriebenen Erkennung einer Starthilfe läßt sich mit dem vorgeschlagenen Algorithmus auch ein Anschleppen bzw. ein Anschieben eines Kraftfahrzeuges mit Schaltgetriebe erkennen. Dabei werden die Raddrehzahl und die Motordrehzahl überwacht und im Falle des Erfassens eines Wertes > 0 der Raddrehzahl bei gleichzeitig stehendem Motor (Motordrehzahl = 0) von einem externen Anschleppen bzw. Anschieben ausgegangen.

## Patentansprüche

1. Einrichtung zur Erkennung einer Fremdenergieversorgung, insbesondere eines Fremdstarts eines Fahrzeugs, das ein elektrisches Bordnetz (14) mit einer Batterie (10) zur Bereitstellung einer Bordnetzspannung aufweist, **gekennzeichnet durch** eine zwischen der Batterie (10) und dem Bordnetz (14) angeordneten Überwachungseinheit (13) mit wenigstens einem Sensor (20) zur Erfassung der Bordnetzspannung und mit einer Rechnereinheit (23) zur Überwachung und automatischen Erkennung von Änderungen der Bordnetzspannung.

2. Einrichtung nach Anspruch 1, **dadurch gekennzeichnet, dass** die Überwachungseinheit (13) wenigstens einen weiteren Sensor (21) zur Erfassung des aus der Batterie (10) herausfließenden und/oder des in das Bordnetz (14) hineinfließenden elektrischen Stroms aufweist oder mit einem solchen Sensor zusammenarbeitet.

3. Einrichtung nach Anspruch 2, **dadurch gekennzeichnet, dass** die Überwachungseinheit (13) Mittel (23, 24) zur Erkennung von Änderungen der aus der Bordnetzspannung und dem Bordnetzstrom ermittelbaren Bordnetzlast aufweist.

4. Einrichtung nach einem oder mehreren der Ansprüche 1 bis 3, **dadurch gekennzeichnet, dass** die Überwachungseinheit (13) einen Sensor (22) zur Erfassung der Betriebstemperatur der Batterie (10) aufweist oder mit einem solchen Sensor zusammenarbeitet.

5. Einrichtung nach einem oder mehreren der vorhergehenden Ansprüche, **dadurch gekennzeichnet, dass** die Rechnereinheit (23), insbesondere ein Mikrocontroller, zur automatischen Ermittlung von Änderungen der elektrischen Bordnetzgrößen vorgesehen ist.

6. Einrichtung nach Anspruch 5, soweit auf Anspruch 3 rückbezogen, **gekennzeichnet durch** einen mit dem Mikrocontroller (23) zusammenarbeitenden steuerbaren Schalter (24) zur aktiven Änderung der Bordnetzlast.

7. Einrichtung nach Anspruch 5, soweit auf Anspruch 3 rückbezogen, **dadurch gekennzeichnet, dass** der Mikrocontroller (23) an einen CAN-Bus (25) des Fahrzeugs datenleitend angeschlossen ist und die Erkennung einer Änderung der Bordnetzlast mittels über den CAN-Bus (25) bereitgestellter Daten erfolgt.

8. Einrichtung nach einem oder mehreren der vorhergehenden Ansprüche, **gekennzeichnet durch** ein Zeitglied zur Erfassung einer Zeitdauer, insbesondere einer Mindestdauer, eines gegebenenfalls vorliegenden Spannungsverlustes der Bordnetzspannung.

9. Einrichtung nach einem oder mehreren der vorhergehenden Ansprüche, **gekennzeichnet durch** Mittel zur Speicherung eines Wertes der Bordnetzspannung und/oder Bordnetzbelastung und Mittel zum Vergleich des gespeicherten Wertes mit einer etwa sensierten aktuellen Bordnetzspannung bzw. Bordnetzbelastung.

10. Verfahren zum Betrieb einer Einrichtung nach einem oder mehreren der vorhergehenden Ansprüche bei einem einen Motor aufweisenden Kraftfahrzeug, wobei mittels des Motors ein elektrischer Spannungsgenerator betrieben wird, **gekennzeichnet durch** die folgenden Schritte:
a) Überwachen wenigstens einer der elektrischen Bordnetzgrößen und/oder des Zustandes der Überwachungseinheit während einer Anlaufphase der Überwachungseinheit;
b) Überwachen wenigstens einer der elektrischen Bordnetzgrößen vor Durchführen eines Motorstarts;
c) Überwachen wenigstens einer der Batteriezustandsgrößen während einer Motorstartphase.

11. Verfahren nach Anspruch 10, **gekennzeichnet durch** den weiteren Schritt
d) Überwachen wenigstens einer der Batteriezustandsgrößen nach einem Motorstart bis hin zu einem Fahrtbeginn des Fahrzeugs.

12. Verfahren nach Anspruch 10 oder 11, **dadurch gekennzeichnet, dass** der (die) Schritt(e) a) nur einmal während des Starts der Überwachungseinheit durchlaufen wird (werden) und die Schritte b) und c) in einer Schleife bis zum Erreichen eines definierten Endzustandes durchlaufen werden.

13. Verfahren nach einem oder mehreren der Ansprüche 10 bis 12, **dadurch gekennzeichnet, dass** in Schritt a) geprüft wird, ob die Überwachungseinheit aus einem 'Sleep'-Modus oder aus einem 'Power-On-Reset-Modus' aktiviert wird und im Falle eines 'Power-On-Reset-Modus' weiter geprüft wird, ob eine vorgebbare Mindestdauer des Spannungsverlusts überschritten worden ist.

14. Verfahren nach einem oder mehreren der Ansprüche 10 bis 13, **dadurch gekennzeichnet, dass** vor einem Eintreten der Überwachungseinheit in einen 'Sleep'-Modus eine zuletzt gemessene Bordnetzspannung und/oder eine zyklisch mittels regelmäßigen Weckens aus dem 'Sleep'-Modus erfasste Bordnetzspannung abgespeichert wird und dass eine regelmäßig erfasste aktuelle Bordnetzspannung mit dem abgespeicherten Wert verglichen wird.

15. Verfahren nach Anspruch 14, **dadurch gekennzeichnet, dass** zusätzlich die Bordnetzlast erfasst und entsprechend verglichen wird.

16. Verfahren nach einem oder mehreren der Ansprüche 10 bis 15, **dadurch gekennzeichnet, dass** in Schritt b) geprüft wird, ob die Bordnetzspannung, bei nicht laufendem Motor, einen zwischen einer Batterienormspannung und einer Generatornormspannung liegenden ersten Schwellenwert überschreitet, und wenn dies der Fall ist, ob innerhalb eines vorgebbaren ersten Zeitfensters ein Motorstart durchgeführt wird.

17. Verfahren nach Anspruch 16, **dadurch gekennzeichnet, dass** im Falle, dass innerhalb des ersten Zeitfensters kein Motorstart erfolgt ist, weiter geprüft wird, ob die Bordnetzspannung wieder absinkt, ohne dass sich die Bordnetzlast ändert.

18. Verfahren nach Anspruch 16, **dadurch gekennzeichnet, dass** im Falle, dass die Bordnetzspannung den ersten Schwellenwert nicht überschreitet, weiter geprüft wird, ob sich die Bordnetzspannung, bei nicht laufendem Motor, innerhalb eines wenige Sekunden, insbesondere etwa 5 - 10 Sekunden, andauernden vorgebbaren zweiten Zeitfensters erhöht.

19. Verfahren nach Anspruch 18, **dadurch gekennzeichnet, dass** zusätzlich geprüft wird, ob die Bordnetzspannung einen zweiten Schwellenwert überschreitet.

20. Verfahren nach einem oder mehreren der Ansprüche 10 bis 19, **dadurch gekennzeichnet, dass** in Schritt b) geprüft wird, ob die Bordnetzspannung, bei gleichbleibender Bordnetzlast und ohne dass der Generator Strom liefert, einen dritten Schwellenwert überschreitet.

21. Verfahren nach einem oder mehreren der Ansprüche 10 bis 20, **dadurch gekennzeichnet, dass** in Schritt c) der elektrische Innenwiderstand der Batterie, insbesondere als Funktion der Temperatur, während eines gelungenen Motorstarts erfasst und gespeichert wird und danach geprüft wird, ob ein aktuell gemessener Wert des Innenwiderstandes unterhalb des gespeicherten Wertes liegt.

22. Verfahren nach einem oder mehreren der Ansprüche 10 bis 21, **dadurch gekennzeichnet, dass** in Schritt c) zusätzlich die Betriebstemperatur der Batterie erfasst und geprüft wird, ob die Betriebstemperatur den erfassten Wert überschreitet.

23. Verfahren nach Anspruch 20 oder 22, **dadurch gekennzeichnet, dass** der erfasste Innenwiderstand und/oder die erfasste Betriebstemperatur der Batterie im Falle eines ersten Startversuchs abgespeichert wird (werden).

24. Verfahren nach Anspruch 23, **dadurch gekennzeichnet, dass** die Batterieparameter des zuletzt erfolgten Startversuchs als Referenz für den Vergleich herangezogen werden.

25. Verfahren nach einem oder mehreren der Ansprüche 10 bis 24, **dadurch gekennzeichnet, dass** ein Schaltersignal des Kofferraumdeckels oder der Motorraumhaube des Fahrzeugs ausgewertet wird, um einen Öffnungszustand festzustellen.

26. Verfahren zum Erkennen eines fremdverursachten Anschiebens eines Kraftfahrzeugs, insbesondere als zusätzlicher Überwachungsschritt bei einem Verfahren nach einem oder mehreren der Ansprüche 10 bis 25,
**dadurch gekennzeichnet,**
**dass** wenigstens eine Raddrehzahl und die Motordrehzahl des Kraftfahrzeugs überwacht werden und im Falle des Erfassens eines Wertes > 0 der Raddrehzahl und gleichzeitig eines Wertes = 0 der Motordrehzahl von einem fremdverursachten Anschieben, insbesondere von einem Anschleppen des Kraftfahrzeugs, ausgegangen wird.
